# EUROPÄISCHE PATENTSCHRIFT

(11) **EP 2 636 862 B1**
(45) Veröffentlichungstag und Bekanntmachung des Hinweises auf die Patenterteilung: **14.10.2015**
(21) Anmeldenummer: 13156959.2
(22) Anmeldetag: 27.02.2013
(51) Int. Cl.: F01N 3/20

(54) **Fördereinheit für ein flüssiges Additiv sowie Verfahren zum Betrieb dieser Fördereinheit**
Delivery unit for a liquid additive and method for operating said delivery unit
Unité de transport pour un additif liquide et procédé de fonctionnement de celui-ci

(30) Priorität: 07.03.2012 DE 102012004726
(43) Veröffentlichungstag der Anmeldung: 11.09.2013
(73) Patentinhaber: Continental Automotive GmbH, 30165 Hannover (DE)
(72) Erfinder: Brück, Rolf, 51429 Bergisch Gladbach (DE); Hodgson, Jan, 53840 Troisdorf (DE)

(56) Entgegenhaltungen:
- WO-A1-2012/093051
- WO-A1-2013/029849
- DE-A1-102008 000 932
- DE-A1-102008 022 991
- DE-A1-102008 063 488

## Beschreibung

Die Erfindung betrifft eine Fördereinheit für ein flüssiges Additiv. Insbesondere ist die Fördereinheit dazu geeignet, ein flüssiges Additiv in die Abgasbehandlungsvorrichtung einer Verbrennungskraftmaschine zu fördern.

Insbesondere im Kraftfahrzeugbereich sind Abgassysteme von Verbrennungskraftmaschinen verbreitet, in welche ein flüssiges Additiv (Oxidationsmittel und/oder Reduktionsmittel) zugeführt wird. Ein gerade bei Diesel-Kraftfahrzeugen häufig in Abgasbehandlungsvorrichtungen durchgeführtes Abgasreinigungsverfahren ist das Verfahren der selektiven katalytischen Reduktion (SCR-Verfahren, SCR = Selective Catalytic Reduction), bei welchem Stickstoffoxidverbindungen im Abgas unter Zuhilfenahme eines Reduktionsmittels reduziert werden. Als Reduktionsmittel wird dabei Ammoniak verwendet. Ammoniak wird in Kraftfahrzeugen bevorzugt nicht selbst bevorratet, sondern in Form einer Reduktionsmittelvorläuferlösung, welche zu Ammoniak umgesetzt werden kann. Eine geeignete Reduktionsmittelvorläuferlösung ist wässrige Harnstoff-Lösung, die beispielsweise mit einem Harnstoffgehalt von 32,5 % unter dem Handelsnamen AdBlue^{®} erhältlich ist. Diese Reduktionsmittelvorläuferlösung kann in einem Kraftfahrzeug als flüssiges Additiv bevorratet und über eine Fördereinheit einer Abgasbehandlungsvorrichtung zugeführt werden.

Die hierfür benötigte Fördereinheit sollte möglichst kostengünstig und zuverlässig sein. Insbesondere sollte die Fördereinheit so ausgestaltet sein, dass die von der Fördereinheit bereitgestellte Menge an flüssigem Additiv möglichst genau bestimmt und/oder dosiert werden kann.

Außerdem ist problematisch, dass flüssige (insbesondere wässrige) Additive bei niedrigen Temperaturen einfrieren können. Die beschriebene wässrige Harnstoff-Lösung AdBlue^{®} friert beispielsweise bei Temperaturen von ca. -11 °C ein. Die Fördereinheit sollte daher so ausgestaltet sein, dass sie durch einfrierendes flüssiges Additiv nicht beschädigt wird.

Darüber hinaus sollte insbesondere zu Beginn des Betriebs der Fördereinheit sichergestellt werden können, dass sich keine Luftblasen in der Fördereinheit befinden, weil durch Luftblasen in der Fördereinheit die Funktion und/oder Dosiergenauigkeit der Fördereinheit negativ beeinflusst werden kann.

Außerdem sollte nach der Inbetriebnahme der Fördereinheit (nach/mit dem Start eines Kraftfahrzeuges) möglichst schnell eine zuverlässige und genaue Bereitstellung von flüssigem Additiv möglich sein

Aus der WO 2012/093051 A1 ist eine Fördervorrichtung zur Versorgung eines Abgasnachbehandlungssystems einer Brennkraftmaschine mit einem Reduktionsmittel bekannt, welches eine erste Pumpe und eine zweite Pumpe aufweist, die jeweils über eine Kupplung mit einem Motor verbunden werden können.

Hiervon ausgehend ist es Aufgabe der hier vorliegenden Erfindung, die im Zusammenhang mit dem Stand der Technik geschilderten Probleme wenigstens teilweise zu lösen bzw. zumindest zu lindern. Es sollen insbesondere eine besonders kostengünstige, genaue und robuste Fördereinheit für ein flüssiges Additiv sowie ein Verfahren zum Betrieb dieser Fördereinheit angegeben werden.

Diese Aufgaben werden gelöst mit einer Vorrichtung gemäß den Merkmalen des Patentanspruchs 1 und einem Verfahren gemäß den Merkmalen des Patentanspruchs 7. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft eine Fördereinheit für ein flüssiges Additiv, aufweisend eine erste Pumpe mit einem ersten Ansauganschluss und mit einem ersten Druckanschluss, eine zweite Pumpe mit einem zweiten Ansauganschluss und mit einem zweiten Druckanschluss sowie eine Zufuhrvorrichtung, wobei die Zufuhrvorrichtung über ein erstes Leitungssystem mit dem ersten Druckanschluss verbunden ist und der erste Ansauganschluss über ein zweites Leitungssystem mit einem Tank für das flüssige Additiv verbunden ist, und weiter der zweite Druckanschluss über ein drittes Leitungssystem mit dem Tank und der zweite Ansauganschluss über eine Verzweigung des ersten Leitungssystems mit der Zufuhrvorrichtung verbunden ist, wobei das zweite Leitungssystem und das dritte Leitungssystem voneinander getrennt sind, wobei die erste Pumpe einen ersten elektrischen Antrieb und die zweite Pumpe einen zweiten elektrischen Antrieb hat.

Die Fördereinheit für ein flüssiges Additiv ist insbesondere so konzipiert, dass diese zur Förderung von Reduktionsmittel bzw. Reduktionsmittelvorläufer und insbesondere von wässriger Harnstoff-Lösung eingesetzt werden kann. Die Fördereinheit ist insbesondere auch so gestaltet, dass diese in ein Kraftfahrzeug integriert werden kann.

Die Fördereinheit kann derart ausgestaltet sein, dass durch den Betrieb der ersten Pumpe bereits eine genaue Dosierung des flüssigen Additivs erfolgen kann. Die Fördereinheit kann auch so ausgestaltet sein, dass die erste Pumpe lediglich dazu dient, in dem ersten Leitungssystem einen vorgegebenen Druck des flüssigen Additivs aufzubauen und die genaue Dosierung des flüssigen Additivs dann über die Zufuhrvorrichtung erfolgt, welche beispielsweise einen elektromagnetisch kontrolliert betriebenen Injektor aufweist, wobei über eine vorgebbare Öffnungszeit des Injektors die zugeführte Menge an flüssigem Additiv genau bestimmt werden kann.

Die Pumpen sind vorzugsweise pulsartig arbeitende Pumpen, welche zumindest ein Auslassventil und gegebenenfalls zusätzlich ein Einlassventil sowie eine Pumpenkammer aufweisen. Durch eine Bewegung eines beweglichen Pumpenelements (Kolben, Membran, etc.) in der Pumpenkammer wird die Förderung von flüssigem Additiv in der Pumpe bzw. durch die Pumpe hindurch bewirkt. Das bewegliche Pumpenelement schiebt das flüssige Additiv durch das Auslassventil aus. Die erste Pumpe hat einen ersten elektrischen Antrieb. Die zweite Pumpe hat einen zweiten elektrischen Antrieb. Die Pumpen werden vorzugsweise von ihren jeweiligen elektrischen Antrieben angetrieben. Ein elektrischer Antrieb kann ein Rotationsantrieb oder ein Linearantrieb sein. Eine mit einem Rotationsantrieb erzeugte Rotationsbewegung kann von einem Übersetzungsmittel (beispielsweise einen Pleuel oder einer Nockenscheibe) auf einen Kolben oder eine Membran der Pumpe übertragen werden. Ein elektrischer Antrieb weist typischerweise zumindest eine elektrische Spule auf, die ein magnetisches Feld erzeugt, wenn ein Strom hindurch fließt. Dieses magnetische Feld erzeugt eine Kraft auf einen Anker des Antriebs, so dass der Anker eine Antriebsbewegung ausführt.

Die erste Pumpe dient insbesondere der "regulären" Förderung von flüssigem Additiv hin zur Zugabevorrichtung und weist daher vorzugsweise gegenüber der zweiten Pumpe eine erhöhte Lebensdauer und/oder Förderleistung auf. Die zweite Pumpe dient bevorzugt lediglich zum Fördern des flüssigen Additivs zurück durch das dritte Leitungssystem, um die verschiedenen Leitungssysteme (das erste Leitungssystem, das zweite Leitungssystem und/oder das dritte Leitungssystem) wenigstens teilweise zu leeren und/oder zu spülen und insbesondere, um Luftblasen aus wenigstens einem der Leitungssysteme hinaus zu fördern. Daher wird die zweite Pumpe im Betrieb der Fördereinheit meist seltener betrieben als die erste Pumpe und kann daher eine geringere Lebensdauer und/oder Förderleistung aufweisen.

Die erste Pumpe und die zweite Pumpe saugen jeweils an ihrem Ansauganschluss flüssiges Additiv an, während an ihrem Druckanschluss das flüssige Additiv mit erhöhtem Druck bereitgestellt bzw. abgegeben wird. Die verschiedenen Leitungssysteme sind beispielsweise nach Art von Schläuchen und/oder nach Art von Kanälen ausgestaltet. Die Kanäle können beispielsweise mit Bohrungen und/oder gegossenen Hohlräumen in einem Block einer Fördereinheit und/oder Rohren gebildet sein. Die Leitungssysteme sind insbesondere beständig hinsichtlich der Förderung von wässriger Harnstoff-Lösung und können zumindest teilweise (aktiv und/oder kontrolliert) beheizt werden.

Die vorgeschlagene Fördereinheit zeichnet sich insbesondere auch dadurch aus, dass das zweite Leitungssystem und das dritte Leitungssystem voneinander getrennt sind. Es existiert insbesondere kein separater, für das flüssige Additiv passierbarer Weg und/oder Kanal zwischen dem zweiten Leitungssystem und dem dritten Leitungssystem. Das heißt mit anderen Worten auch, dass das flüssige Additiv nur über das erste Leitungssystem oder den Tank vom zweiten Leitungssystem in das dritte Leitungssystem gefördert werden kann. Flüssiges Additiv, das sich im zweiten Leitungssystem befindet, kann vorzugsweise nur durch die erste Pumpe das erste Leitungssystem und die zweite Pumpe in das dritte Leitungssystem gelangen. Flüssiges Additiv, welches sich im dritten Leitungssystem befindet, kann vorzugsweise nur durch den Tank in das zweite Leitungssystem gelangen. Durch eine derartige Gestaltung kann sichergestellt werden, dass bei einer Art Kreisförderung des flüssigen Additivs durch das zweite Leitungssystem, das erste Leitungssystem und das dritte Leitungssystem (in dieser Reihenfolge) eine Luftblase, welche sich in einem der drei Leitungssysteme befindet, zuverlässig zurück in den Tank für das flüssige Additiv gefördert wird. Dies wird insbesondere durch die "umwälzende" bzw. "ungeführte" Weiterleitung des flüssigen Additivs in der Pumpe und/oder dem Tank erreicht.

Das zweite Leitungssystem und das erste Leitungssystem bilden zusammen eine (direkte) Förderleitung für das flüssige Additiv vom Tank zu der Zufuhrvorrichtung. Das dritte Leitungssystem bildet eine Art Rücklaufleitung, durch welche die Förderleitung (bzw. das zweite Leitungssystem und das erste Leitungssystem) teilweise oder sogar vollständig entlüftet / geleert werden kann. Das erste Leitungssystem hat dafür eine Verzweigung hin zur zweiten Pumpe. Damit hat das erste Leitungssystem insgesamt bevorzugt drei Enden. Ein erstes Ende ist an den ersten Druckanschluss der ersten Pumpe angeschlossen. Ein zweites Ende ist an den zweiten Ansauganschluss der zweiten Pumpe angeschlossen. Ein drittes Ende ist an die Zufuhrvorrichtung angeschlossen.

Die Fördereinheit kann als ein in den Tank integriertes Fördermodul ausgestaltet sein. Die Fördereinheit kann auch eine externe Fördereinheit sein, welche sich außerhalb eines Tanks befindet. Das zweite Leitungssystem ist dann vorzugsweise als eine Ansaugleitung ausgestaltet, welche ein Saugrohr umfasst, über welches dem Tank das flüssige Additiv entnommen werden kann. Das dritte Leitungssystem, welches eine Art Rücklaufleitung darstellt, mündet getrennt von dem zweiten Leitungssystem in den Tank.

Bevorzugt ist eine Fördereinheit, bei der das zweite Leitungssystem von dem Tank durch einen Filter getrennt ist. Wenn über das zweite Leitungssystem flüssiges Additiv aus dem Tank mittels der ersten Pumpe angesaugt wird, wird das (rückgeführte) flüssige Additiv vorzugsweise (zwingend) durch den beschriebenen Filter hindurch gesaugt. Der Filter kann beispielsweise als eine Art Gewebe und/oder als Vlies ausgebildet sein, welcher eine Ansaugstelle an dem zweiten Leitungssystem umgibt. Insbesondere existiert von dem dritten Leitungssystem hin zu dem zweiten Leitungssystem auch kein Strömungsweg für das flüssige Additiv, der an diesem Filter vorbeiführt. Der Filter kann in einer Betrachtungsweise als Trennungselement zwischen dem dritten Leitungssystem und dem zweiten Leitungssystem angesehen werden. Zudem ist der Filter ebenfalls beständig für das Additiv und ggf. auch (elektrisch) heizbar ausgeführt. Der Filter unterbindet dabei nicht nur, dass unerwünschte Partikel eingesaugt werden, sondern auch den Eintritt von (größeren) Luftblasen, die (rückgeführt wurden und) die Funktionalität der Fördereinheit gefährden.

Besonders bevorzugt ist die Fördereinheit, wenn das erste Leitungssystem mit einem Pulsationsdämpfer versehen ist. Ein derartiger Pulsationsdämpfer kann dazu dienen, Druckschwankungen, welche durch die erste Pumpe bzw. durch die Förderbewegung eines beweglichen Pumpenelementes der ersten Pumpe in dem ersten Leitungssystem verursacht werden, zu reduzieren. Der Pulsationsdämpfer kann als bewegliches und/oder komprimierbares Element ausgeführt sein, das an und/oder in dem ersten Leitungssystem vorgesehen ist.

Weiterhin vorteilhaft ist die Fördereinheit, wenn die zweite Pumpe dazu eingerichtet ist, als Ventil zu wirken. Während des Betriebes der Fördereinheit wird flüssiges Additiv für eine Abgasbehandlungsvorrichtung bereitgestellt (z. B. nach Art eines Druckspeichers in dem ersten Leitungssystem), wobei dann die zweite Pumpe normalerweise deaktiviert ist. Die zweite Pumpe hat insbesondere (nur) die Aufgabe, die Fördereinheit bzw. die Leitungssysteme der Fördereinheit zu spülen. Wenn kein Spülbetrieb vorliegt, ist die zweite Pumpe daher bevorzugt deaktiviert. Um einen Verlust an Förderleistung durch eine (Leckage-)Strömung des flüssigen Additivs durch das dritte Leitungssystem zu vermeiden, sollte der Weg von dem ersten Leitungssystem in das dritte Leitungssystem durch die zweite Pumpe in dieser Phase verschlossen sein. Somit wirkt die zweite Pumpe als (shut-off-)Ventil. Durch die so eingerichtete zweite Pumpe ist in der Verbindung vom ersten Leitungssystem zum dritten Leitungssystem daher kein zusätzliches Ventil notwendig.

Auch wird eine Fördereinheit als vorteilhaft angesehen, wenn die zweite Pumpe das erste Leitungssystem und das dritte Leitungssystem in einer Richtung vom zweiten Ansauganschluss hin zum zweiten Druckanschluss voneinander trennt, wenn die Pumpe deaktiviert ist. Vorzugsweise ist keine elektrische Energie notwendig, damit die zweite Pumpe als Trennung bzw. Ventil wirkt, sondern, wenn die Pumpe deaktiviert ist, ist ein Strömungsweg vom ersten Leitungssystem in das dritte Leitungssystem fluiddicht verschlossen.

Weiterhin vorteilhaft ist die Fördereinheit, wenn das zweite Leitungssystem und das dritte Leitungssystem jeweils eine Schlauchleitung aufweisen, die an einen Tank angeschlossen sind. Schlauchleitungen sind insbesondere vorteilhaft, wenn die Fördereinheit außerhalb eines Tanks montiert ist. Die Schlauchleitung, welche Bestandteil des zweiten Leitungssystems ist, bildet vorzugsweise dann auch eine Art Saugrohr aus, durch welches flüssiges Additiv in der Nähe eines Bodens des Tanks für das flüssige Additiv entnommen werden kann. So kann sichergestellt werden, dass das in dem Tank vorliegende flüssige Additiv von der Fördereinheit möglichst vollständig aus dem Tank hinausgefördert werden kann. Die (flexiblen) Schlauchleitungen können zudem auch zumindest teilweise eine Volumenexpansion von darin befindlichem, gefrierendem Additiv aufnehmen und/oder beheizbar ausgeführt sein.

Einem weiteren Aspekt folgend wird ein Verfahren zum Betrieb einer Fördereinheit, wie sie hier erfindungsgemäß beschrieben ist, angegeben, welches zumindest folgende Schritte aufweist:
a) Zeitgleiches Betreiben der ersten Pumpe und der zweiten Pumpe zum Spülen des ersten Leitungssystems, des zweiten Leitungssystems und des dritten Leitungssystems;
b) Deaktivieren der zweiten Pumpe, um den Spülvorgang zu beenden; und
c) Betreiben der ersten Pumpe, um flüssiges Additiv durch die Zufuhrvorrichtung zu dosieren.

Während Schritt a) findet vorzugsweise eine Kreisförderung von flüssigem Additiv durch die drei Leitungssysteme zurück in den Tank für das flüssige Additiv statt. Insbesondere stellt das Spülen einen Entlüftungsvorgang dar, bei welchem Luftblasen aus den drei Leitungssystemen heraus (in den Tank) transportiert werden können. Dieser Schritt a) kann beispielsweise zu Beginn einer Aktivierung der Fördereinheit und/oder auf konkrete Initiierung durchgeführt werden. So kann vorher ein Prozess zur Bestimmung des Anteils und/oder der Verteilung von Luftblasen in wenigstens einem der Leitungssysteme durchgeführt werden und Schritt a) initiiert werden, wenn Luftblasen erkannt werden.

Durch die Deaktivierung der zweiten Pumpe im Schritt b) wird vorzugsweise das erste Leitungssystem von dem dritten Leitungssystem getrennt. Die zweite Pumpe wirkt dann wie ein Ventil. Eine Kreisförderung von flüssigem Additiv ist dann nicht mehr möglich. Schritt b) kann zum Beispiel nach einer vorgegebenen Zeitdauer nach dem Start des Schrittes a) eingeleitet werden. Gegebenenfalls kann dann nochmals der Prozess zur Bestimmung des Anteils und/oder der Verteilung von Luftblasen in wenigstens einem der Leitungssysteme durchgeführt werden. Falls dann immer noch unerwünschte Luftblasen festgestellt werden, kann Schritt a) auch (mehrfach bzw. angepasst) wiederholt werden. Andernfalls kann in den "regulären" Betrieb übergegangen werden.

In Schritt c) wird das flüssige Additiv durch die Zufuhrvorrichtung dosiert. Die Zufuhrvorrichtung umfasst vorzugsweise einen Injektor, wobei durch die (kontrolliert vorgegebene) Öffnungszeit des Injektors die zugeführte Menge an flüssigem Additiv exakt gesteuert wird, und so eine Dosierung erfolgen kann. Die dosierte Menge an flüssigem Additiv entspricht vorzugsweise genau der Menge an flüssigem Additiv, welche während Schritt c) mit Hilfe der ersten Pumpe gefördert wird. Dabei bleibt die zweite Pumpe normalerweise deaktiviert.

Besonders vorteilhaft ist das beschriebene Verfahren, wenn während Schritt a) flüssiges Additiv durch die Zufuhrvorrichtung dosiert wird. Bei dieser bevorzugten Verfahrensvariante finden in Schritt a) parallel ein Spülbetrieb durch die drei Leitungssysteme sowie ein Dosierbetrieb von flüssigem Additiv z. B. in eine Abgasleitung statt. Dies ist dadurch möglich, dass die Fördermenge der ersten Pumpe und die Fördermenge der zweiten Pumpe durch Überwachung der jeweiligen Betriebsparameter genau ermittelt werden können. Die Differenz der Fördermenge der ersten Pumpe und der Fördermenge der zweiten Pumpe stellt dann die Dosiermenge an flüssigem Additiv dar. Durch diese Verfahrensführung ist es möglich, dass der Dosierbetrieb der Fördereinheit während eines Spülvorgangs nicht unterbrochen werden muss. Dies eröffnet auch die Möglichkeit, Schritt a) während des "regulären" Betriebes durchzuführen, ohne dass eine unkontrollierte (ungenaue) Förderung des flüssigen Additivs hin zum Tank und/oder der Abgasleitung erfolgt - hier ist ein wesentlicher Vorteil der Vorrichtung.

Die für die beschriebene Fördereinheit geschilderten besonderen Vorteile und Ausgestaltungsmerkmale sind in entsprechender Weise auf das beschriebene Verfahren anwendbar und übertragbar. Gleiches gilt für die für das beschriebene Verfahren geschilderten besonderen Vorteile und Ausgestaltungsmerkmale, welche in entsprechender Weise auf die beschriebene Fördereinheit anwendbar und übertragbar sind.

Die Erfindung findet insbesondere Anwendung bei einem Kraftfahrzeug, aufweisend eine Verbrennungskraftmaschine und eine Abgasbehandlungsvorrichtung zur Reinigung der Abgase der Verbrennungskraftmaschine, wobei an der Abgasbehandlungsvorrichtung eine Zufuhrvorrichtung vorgesehen ist, durch welche flüssiges Additiv mit der hier beschriebenen Fördereinheit in die Abgasbehandlungsvorrichtung dosiert werden kann. Die beschriebene Fördereinheit in dem Kraftfahrzeug ist insbesondere auch dazu konzipiert und eingerichtet, mit hier beschriebenen Verfahren betrieben zu werden. Dazu weist das Kraftfahrzeug vorzugsweise eine Kontrolleinheit auf, in welcher entsprechende Programmroutinen hinterlegt sind. Die Erfindung ermöglicht insbesondere die dosierte Zugabe von wässriger Harnstoff-Lösung in eine Abgasbehandlungsvorrichtung des Kraftfahrzeuges, so dass dort effektiv das SCR-Verfahren durchgeführt werden kann.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: ein Ausführungsbeispiel einer erfindungsgemäßen Fördereinheit, und
- Fig. 2:: ein Kraftfahrzeug aufweisend eine beschriebene Fördereinheit.

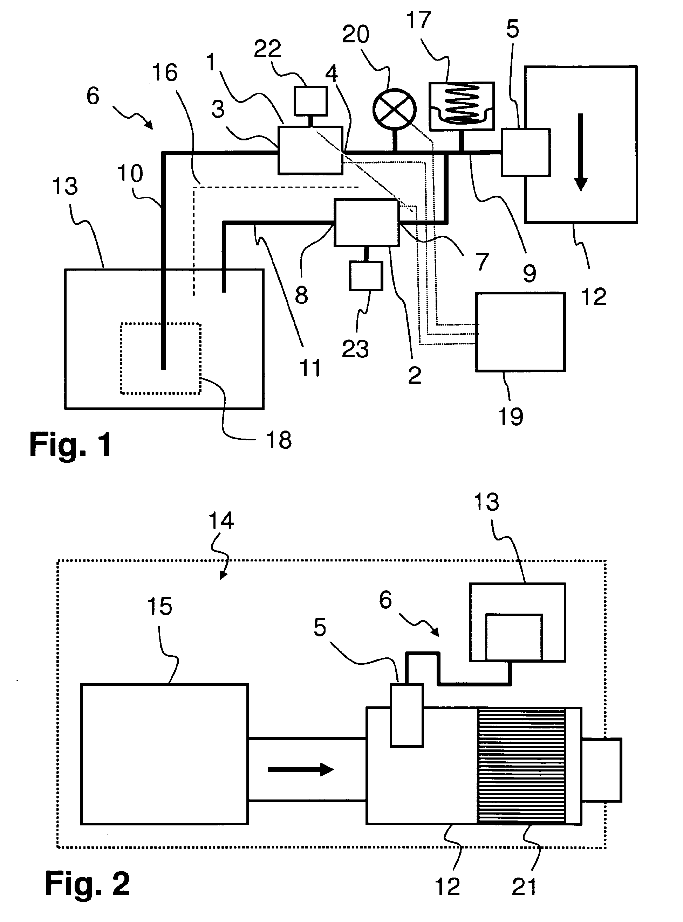

Schematisch zeigt Fig. 1 eine Fördereinheit 6 zur Förderung eines flüssigen Additivs, insbesondere wässriger Harnstoff-Lösung. Die Fördereinheit 6 weist ein erstes Leitungssystem 9, ein zweites Leitungssystem 10 und ein drittes Leitungssystem 11 auf. Das zweite Leitungssystem 10 und das erste Leitungssystem 9 sind über eine erste Pumpe 1 miteinander verbunden. Das zweite Leitungssystem 10 ist an einen ersten Ansauganschluss 3 der ersten Pumpe 1 angebunden. Das erste Leitungssystem 9 ist an einen ersten Druckanschluss 4 der ersten Pumpe 1 angebunden. Darüber hinaus existiert eine zweite Pumpe 2, welche an das erste Leitungssystem 9 und an das dritte Leitungssystem 11 angebunden ist. Das erste Leitungssystem 9 ist über einen zweiten Ansauganschluss 7 an die zweite Pumpe 2 angebunden. Das dritte Leitungssystem 11 ist über einen zweiten Druckanschluss 8 an die zweite Pumpe 2 angebunden. Die erste Pumpe 1 hat einen ersten elektrischen Antrieb 22 und die zweite Pumpe 2 hat einen zweiten elektrischen Antrieb 23. An das erste Leitungssystem 9 ist auch eine Zufuhrvorrichtung 5 angebunden, über welche flüssiges Additiv in eine Abgasbehandlungsvorrichtung 12 zugeführt werden kann. Das zweite Leitungssystem 10 und das dritte Leitungssystem 11 sind jeweils an einen Tank 13 angebunden.

Weiter sind das zweite Leitungssystem 10 und das dritte Leitungssystem 11 durch eine fluidische Trennung 16 voneinander getrennt. Es existiert außerhalb des Tanks 13 keine Verbindung zwischen dem zweiten Leitungssystem 10 und dem dritten Leitungssystem 11. Das zweite Leitungssystem 10 ist vorzugsweise zudem durch einen Filter 18 von dem Tank 13 getrennt. Flüssiges Additiv, welches aus dem Tank 13 in das zweite Leitungssystem 10 gesaugt werden soll, muss daher den Filter 18 passieren. Zudem ist an dem ersten Leitungssystem 9 ein Pulsationsdämpfer 17 vorgesehen, durch welchen Druckschwankungen, welche von der ersten Pumpe 1 in dem ersten Leitungssystem 9 verursacht werden, kompensiert werden können. Darüber hinaus ist beispielhaft ein Sensor 20 zur Bestimmung des Drucks und/oder der Temperatur dargestellt, welcher an dem ersten Leitungssystem 9 angeordnet ist. Die erste Pumpe 1, die zweite Pumpe 2 und der Sensor 20 sind an eine Kontrolleinheit 19 angebunden, welche eingerichtet ist, den Betrieb einer Fördereinheit 6 vorzugeben.

Fig. 2 zeigt ein Kraftfahrzeug 14, aufweisend eine Verbrennungskraftmaschine 15 und eine Abgasbehandlungsvorrichtung 12 zur Reinigung der Abgase der Verbrennungskraftmaschine 15. In die Abgasbehandlungsvorrichtung 12 ist flüssiges Additiv mit einer Fördereinheit 6 förderbar. Die Fördereinheit umfasst eine Zufuhrvorrichtung 5, mit welcher das flüssige Additiv der Abgasbehandlungsvorrichtung zugeführt wird. Die Fördereinheit fördert das flüssige Additiv aus einem Tank 13 hinaus. Insbesondere kann so wässrige Harnstoff-Lösung in besonders genauen Dosen einem SCR-Katalysator 21 in der Abgasbehandlungsvorrichtung 12 zugeführt werden.

### Bezugszeichenliste

- 1: erste Pumpe
- 2: zweite Pumpe
- 3: erster Ansauganschluss
- 4: erster Druckanschluss
- 5: Zufuhrvorrichtung
- 6: Fördereinheit
- 7: zweiter Ansauganschluss
- 8: zweiter Druckanschluss
- 9: erstes Leitungssystem
- 10: zweites Leitungssystem
- 11: drittes Leitungssystem
- 12: Abgasbehandlungsvorrichtung
- 13: Tank
- 14: Kraftfahrzeug
- 15: Verbrennungskraftmaschine
- 16: fluidische Trennung
- 17: Pulsationsdämpfer
- 18: Filter
- 19: Kontrolleinheit
- 20: Sensor
- 21: SCR-Katalysator
- 22: erster elektrischer Antrieb
- 23: zweiter elektrischer Antrieb

## Patentansprüche

1. Fördereinheit (6) für ein flüssiges Additiv, aufweisend eine erste Pumpe (1) mit einem ersten Ansauganschluss (3) und mit einem ersten Druckanschluss (4), eine zweite Pumpe (2) mit einem zweiten Ansauganschluss (7) und mit einem zweiten Druckanschluss (8) sowie eine Zufuhrvorrichtung (5), wobei die Zufuhrvorrichtung (5) über ein erstes Leitungssystem (9) mit dem ersten Druckanschluss (4) verbunden ist und der erste Ansauganschluss (3) über ein zweites Leitungssystem (10) mit einem Tank (13) für das flüssige Additiv verbunden ist, und weiter der zweite Druckanschluss (8) über ein drittes Leitungssystem (11) mit dem Tank (13) und der zweite Ansauganschluss (7) über eine Verzweigung des ersten Leitungssystems (9) mit der Zufuhrvorrichtung (5) verbunden ist, wobei das zweite Leitungssystem (10) und das dritte Leitungssystem (11) voneinander getrennt sind, wobei die erste Pumpe (1) einen ersten elektrischen Antrieb (22) und die zweite Pumpe (2) einen zweiten elektrischen Antrieb (23) hat.

2. Fördereinheit (6) nach Patentanspruch 1, wobei das zweite Leitungssystem (10) von dem Tank (13) durch einen Filter (18) getrennt ist.

3. Fördereinheit (6) nach einem der vorhergehenden Patentansprüche, wobei zumindest das erste Leitungssystem (9) mit einem Pulsationsdämpfer (17) versehen ist.

4. Fördereinheit (6) nach einem der vorhergehenden Patentansprüche, wobei die zweite Pumpe (2) dazu eingerichtet ist, als Ventil zu wirken.

5. Fördereinheit (6) nach Patentanspruch 4, wobei die zweite Pumpe (2) das erste Leitungssystem (9) und das dritte Leitungssystem (11) in einer Richtung vom zweiten Ansauganschluss (7) hin zum zweiten Druckanschluss (8) voneinander trennt, wenn die zweite Pumpe (2) deaktiviert ist.

6. Fördereinheit (6) nach einem der vorhergehenden Patentansprüche, wobei das zweite Leitungssystem (10) und das dritte Leitungssystem (11) jeweils eine Schlauchleitung aufweisen, die an einen Tank (13) angeschlossen sind.

7. Verfahren zum Betrieb einer Fördereinheit (6) nach einem der vorhergehenden Patentansprüche, aufweisend zumindest folgende Schritte:
a) Zeitgleiches Betreiben der ersten Pumpe (1) und der zweiten Pumpe (2) zum Spülen des ersten Leitungssystems (9), des zweiten Leitungssystems (10) und des dritten Leitungssystems (11);
b) Deaktivieren der zweiten Pumpe (2), um den Spülvorgang zu beenden; und
c) Betreiben der ersten Pumpe (1), um flüssiges Additiv durch die Zufuhrvorrichtung (5) zu dosieren.

8. Verfahren nach Patentanspruch 7, wobei während Schritt a) flüssiges Additiv durch die Zufuhrvorrichtung (5) dosiert wird.

9. Kraftfahrzeug (14), aufweisend eine Verbrennungskraftmaschine (15) und eine Abgasbehandlungsvorrichtung (12) zur Reinigung der Abgase der Verbrennungskraftmaschine (15), wobei an der Abgasbehandlungsvorrichtung (12) eine Zufuhrvorrichtung (5) vorgesehen ist, durch welche flüssiges Additiv mit einer Fördereinheit (6) nach einem der Patentansprüche 1 bis 6 in die Abgasbehandlungsvorrichtung (12) dosiert werden kann.

## Claims

1. Delivery unit (6) for a liquid additive, having a first pump (1) with a first suction port (3) and with a first pressure port (4), having a second pump (2) with a second suction port (7) and with a second pressure port (8), and having a feed device (5), wherein the feed device (5) is connected to the first pressure port (4) via a first line system (9) and the first suction port (3) is connected to a tank (13) for the liquid additive via a second line system (10), and furthermore the second pressure port (8) is connected to the tank (13) via a third line system (11) and the second suction port (7) is connected to the feed device (5) via branch of the first line system (9), wherein the second line system (10) and the third line system (11) are separated from one another, wherein the first pump (1) has a first electric drive (22) and the second pump (2) has a second electric drive (23).

2. Delivery unit (6) according to Patent Claim 1, wherein the second line system (10) is separated from the tank (13) by a filter (18).

3. Delivery unit (6) according to one of the preceding patent claims, wherein at least the first line system (9) is provided with a pulsation damper (17).

4. Delivery unit (6) according to one of the preceding patent claims, wherein the second pump (2) is designed to act as a valve.

5. Delivery unit (6) according to Patent Claim 4, wherein the second pump (2) separates the first line system (9) and the third line system (11) from one another in a direction from the second suction port (7) to the second pressure port (8) when the second pump (2) is deactivated.

6. Delivery unit (6) according to one of the preceding patent claims, wherein the second line system (10) and the third line system (11) each have a hose line, which hose lines are connected to a tank (13).

7. Method for operating a delivery unit (6) according to one of the preceding patent claims, having at least the following steps:
a) simultaneous operation of the first pump (1) and of the second pump (2) for the purpose of purging the first line system (9), the second line system (10) and the third line system (11);
b) deactivation of the second pump (2) in order to end the purging process; and
c) operating the first pump (1) in order to dose liquid additive through the feed device (5).

8. Method according to Patent Claim 7, wherein during step a), liquid additive is dosed through the feed device (5).

9. Motor vehicle (14), having an internal combustion engine (15) and having an exhaust-gas treatment device (12) for purifying the exhaust gases of the internal combustion engine (15), wherein on the exhaust-gas treatment device (12) there is provided a feed device (5) through which liquid additive can be dosed into the exhaust-gas treatment device (12) by means of a delivery unit (6) according to one of Patent Claims 1 to 6.

## Revendications

1. Unité (6) de transport d'un additif liquide, comprenant une première pompe (1) ayant une première tubulure (3) d'aspiration et une première tubulure (4) de refoulement, une deuxième pompe ayant une deuxième tubulure (7) d'aspiration et une deuxième tubulure (8) de refoulement, ainsi qu'un dispositif (5) d'apport, le dispositif (5) d'apport communiquant, par un premier système (9) de conduite, avec la tubulure (4) de refoulement et la première tubulure (3) d'aspiration communiquant par un deuxième système (10) de conduite avec un réservoir (13) de l'additif liquide et, en outre, la deuxième tubulure (8) de refoulement communique par un troisième système (11) de conduite avec le réservoir (13) et la deuxième tubulure (7) d'aspiration par une bifurcation du premier système (9) de conduite avec le dispositif (5) d'apport, le deuxième système (10) de conduite et le troisième système (11) de conduite étant séparés l'un de l'autre, la première pompe (1) ayant un premier entraînement (22) électrique et la deuxième pompe (2) un deuxième entraînement (23) électrique.

2. Unité (6) de transport suivant la revendication 1, dans laquelle le deuxième système (10) de conduite est séparé du réservoir (13) par un filtre (18).

3. Unité (6) de transport suivant l'une des revendications précédentes, dans laquelle au moins le premier système (9) de conduite est pourvu d'un amortisseur (17) de pulsation.

4. Unité (6) de transport suivant l'une des revendications précédentes, dans laquelle la deuxième pompe (2) est conçue pour servir de vanne.

5. Unité (6) de transport suivant la revendication 4, dans laquelle la deuxième pompe (2) sépare l'un de l'autre le premier système (9) de conduite et le troisième (11) de conduite dans un sens allant de la deuxième tubulure (7) d'aspiration à la deuxième tubulure (8) de refoulement, lorsque la deuxième pompe (2) est désactivée.

6. Unité (6) de transport suivant l'une des revendications précédentes, dans laquelle le deuxième système (10) de conduite et le troisième système (11) de conduite ont respectivement un conduit souple, qui sont raccordés à un réservoir (13).

7. Procédé pour faire fonctionner une unité (6) de transport suivant l'une des revendications précédentes, ayant au moins les stades suivants :
a) on fait fonctionner en même temps la première pompe (1) et la deuxième pompe (2) pour laver le premier système (9) de conduite, le deuxième système (10) de conduite et le troisième système (11) de conduite ;
b) on désactive la deuxième pompe (2) pour mettre fin au lavage et
c) on fait fonctionner la première pompe (1) pour apporter de manière dosée de l'additif liquide par le dispositif (5) d'apport.

8. Procédé suivant la revendication 7, dans lequel, dans le stade a), on apporte de manière dosée de l'additif liquide par le dispositif (5) d'apport.

9. Véhicule (14) automobile ayant un moteur (15) à combustion interne et un dispositif (12) de traitement des gaz d'échappement pour épurer les gaz d'échappement du moteur (5) à combustion interne, dans lequel il est prévu, sur le dispositif (12) de traitement des gaz d'échappement, un dispositif (5) d'apport, par lequel de l'additif liquide peut être apporté de manière dosée au dispositif (12) de traitement des gaz d'échappement par une unité (6) de transport suivant l'une des revendications 1 à 6.
